## Europäisches Patentamt
## European Patent Office
## Office européen des brevets

(19)

(11) Veröffentlichungsnummer: **0 346 626**
**A2**

(12) # EUROPÄISCHE PATENTANMELDUNG

(21) Anmeldenummer: **89108783.5**

(22) Anmeldetag: **16.05.89**

(51) Int. Cl.⁴: **C04B 28/36 , //B01F13/10, B28B17/02**

(30) Priorität: **13.05.88 HU 240688**

(43) Veröffentlichungstag der Anmeldung:
**20.12.89 Patentblatt 89/51**

(84) Benannte Vertragsstaaten:
**AT BE CH DE ES FR GB GR IT LI LU NL SE**

(71) Anmelder: **Jòzsef, Péter**
**136 Jeszenák J.u.**
**H-1141 Budapest(HU)**

Anmelder: **Kovács, Károly**
**31 Istráng u.**
**H-1162 Budapest(HU)**

Anmelder: **Csányi, Lászlò**
**4, Böszörményi ùt**
**H-1126 Budapest(HU)**

Anmelder: **Csányi geb. Ipkovich, Ilona**
**6, Böszörményi ùt**
**H-1126 Budapest(HU)**

Anmelder: **Leel-Össy, Piroska geb. Almási**
**2, Veronika u**
**H-1023 Budapest(HU)**

Anmelder: **Meitzen, Nándor, Dr.**
**25, Mályva u.**
**H-1141 Budapest(HU)**

Anmelder: **Molnár, Zsuzsanna geb. Balázs**
**24, Trombitás**
**H-1026 Budapest(HU)**

Anmelder: **Reid, Hellema**
**P.O.B. 168**
**NL-9200 AD Drachten(NL)**

(72) Erfinder: **Jòzsef, Péter**
**136 Jeszenák J.u.**
**H-1141 Budapest(HU)**
Erfinder: **Kovács, Károly**
**31 Istráng u.**
**H-1162 Budapest(HU)**
Erfinder: **Csányi, Lászlò**
**4, Böszörményi ùt**
**H-1126 Budapest(HU)**
Erfinder: **Csányi geb. Ipkovich, Ilona**
**6, Böszörményi ùt**
**H-1126 Budapest(HU)**
Erfinder: **Leel-Össy, Piroska geb. Almási**
**2, Veronika u**
**H-1023 Budapest(HU)**
Erfinder: **Meitzen, Nándor, Dr.**
**25, Mályva u.**
**H-1141 Budapest(HU)**
Erfinder: **Molnár, Zsuzsanna geb. Balázs**
**24, Trombitás**
**H-1026 Budapest(HU)**
Erfinder: **Reid, Hellema**
**P.O.B. 168**
**NL-9200 AD Drachten(NL)**

(74) Vertreter: **Dipl.-Ing. Schwabe, Dr. Dr.
Sandmair, Dr. Marx
Stuntzstrasse 16
D-8000 München 80(DE)**

(54) **Präparat und Vorrichtung insbesondere zur Herstellung von präfabrizierten Elementen und ähnlichen Produkten.**

(57) Die Erfindung betrifft ein schwefelhaftiges Gemisch, aus dem insbesondere präfabrizierte Elemente und ähnliche Produkte durch Formgebung erzeugt werden können. Gleichzeitig bezieht sich die Erfindung auf die Vorrichtung zur Erzeugung der erwähnten Produkte.

EP 0 346 626 A2

**Präparat und Vorrichtung insbesondere zur Herstellung von präfabrizierten Elementen und ähnlichen Produkten**

Stand der Technik

In erster Reihe sind aus der Bauindustrie verschiedene Präparate bekannt, die Schwefel bzw. eine Schwefelverbindung enthalten. Die Entwicklung derartiger Kompositionen war für die üblichen Zementbetonprodukte bzw. zur Erhöhung der Festigkeit, der Wassersperrigkeit, der Beständigkeit gegenüber Chemikalien und Frost erforderlich geworden.

Die eine Gruppe der Präparate umfasst die traditionellen Gemische auf Zementbasis, die als Zuschlagstoff irgendwelche schwefelhaltige Verbindung enthalten. Die sowjetische Patentschrift Nr. 1286562 beschreibt eine aus Zement, Zuschlag, Wasser und aus eine äusserst geringe Menge von Alkyl-Benzolsulfonat und Natriumpolyphosphat enthaltendem Zuschlagstoff bestehende Komposition. In der europäischen Offenlegungsschrift 0163459 ist ein Präparat beschrieben, das aus Wasser, Zement und einem Zuschlagstoff - der ein Formaldehydazeton-Kondensat ist - besteht, und der als funktionale Gruppe Natriumsulfonatgruppen enthält.

In der europäischen Offenlegungsschrift 0204370 ist eine aufschaumbare wässerige Betonsuspension spezifiziert, die aus Zement, Dispersionsmittel und Schaumbilder besteht und unter anderen sulfatierten aliphatischen Alkohol mit 6-12 Kohlenstoffatomen enthält.

In der europäischen Offenlegungsschrift 0157055 ist ein Polymerbeton spezifiziert, der aus Wasser, Zement und N,N-dimethyl-akrylamid-2-akrylamido-2-methyl-propan-Sulfonsäure-Kopolymer besteht.

Eine andere Gruppe der Präparate enthält elementären Schwefel an sich oder irgendwelche Modifikation desselben.

Die sowjetische Patentschrift 1248990 beschreibt ein aus Schwefel, Phosphorgips und als Füllstoff aus Phosphorid bestehendes Präparat, das im Vergleich zu sonstigen Zementpräparaten eine höhere Festigkeit, Wassersperrigkeit und Frostbeständigkeit aufweist.

Das sowjetische Patent 1169957 beschreibt die Herstellung von zu Dekorationszwecken dienenden bauindustriellen Produkten, im Laufe des hier spezifizierten Verfahrens wird das Gemisch aus gemahlenem Schwefel, Füllstoff und Zuschlagstoff in eine Form eingegossen und unter Druck auf die Schmelztemperatur erhitzt. Diese Technologie ist aber keinesfalls zuverlässig, eine gleichmässige Materialverteilung kann nicht erreicht werden.

In dem sowjetischen Patent 1265175 ist ein, insbesondere als Überzugsstoff verwendbare Gemisch beschrieben, das aus Dizyklopentadien, aus einem festigkeitssteigerenden Zuschlagstoff, Silicokarnotit oder Elektrothermophophor-Schlacke und Schwefel besteht.

In der französischen Patentschrift FR-PS 2573420 ist eine aus Schwefel, Zuschlagstoff und Füllstoff bestehende Komposition beschrieben, bei der als Zuschlagstoff zweckdienlich Silikonöl verwendet wird. In der deutschen Patentschrift DE-PS 223143 ist ein mit Schwefel gebundenes Dachdeckmaterial beschrieben, das bei der Herstellung des Schiefersteins als Abfall entstehenden Randschieferstein, Schwefel und einen weiteren Zuschlagstoff enthält. Das derweise erhaltene Gemisch wird bei einer Temperatur von 130-160 °C in das Bedachungsmaterial gepresst.

Der gemeinsame Nachteil der beschriebenen Kompositionen besteht darin, dass die Formgebung recht schwierig ist, dabei ergeben sie keine konstante, bzw. homogene Struktur innerhalb ein und desselben Produkts. Ein weiteres Problem zeigt sich bei der Verarbeitung der Produkte infolge der auf die Umgebung ausgeübten schädlichen Wirkung der verwendeten Stoffe.

Der Erfindung wird das Ziel gesetzt ein Gemisch zu entwickeln, mit Hilfe dessen die obenerwähnten Mangelhaftigkeiten eliminiert werden können; eine weitere Zielsetzung besteht in der Erarbeitung einer Technologie, die bei der Formgebung der entsprechenden Präparate die Umweltfreundlichkeit in den Vordergrund stellt.

Eine weitere Zielsetzung der Erfindung besteht in der Schaffung einer Vorrichtung, die zur Realisierung der geschlossenen Technologie geeignet ist.

Das Wesen der Erfindung

Im Sinne der Erfindung enthält das Präparat als Bestandteile Schwefel, thixotropierende Stoffe, Zuschlagstoffe, sowie gegebenenfalls biozide Mittel, Verstärkungsmittel und als Zuschlag dienende Chemikalien.

Schwefel stellt eine grundsätzliche und unentbehrliche Komponente des Präparats dar. Schwefel dient als Bindemittel des Präparats, jedwelche industrieübliche bzw. aus der Industrie stammende Abfallqualität kann verwendet werden. Die Herstellung des erfindungsgemässen Präparats beruht auf jener Charakteristik des Schwefels, indem er bei einer Temperatur von etwa 120 °C schmilzt, in eine wasserflüssige Flüssigkeit verwandelt wird.

Der Schwefel behält diesen Zustand bis zu 155-159 °C, daraufflgend nimmt die Viskosität rapid zu und eine gummiartige Substanz entsteht. Wenn aber der Schwefel in einem Temperaturbereich zwischen 120 und 150 °C mit einem Zuschlagstoff mit zweckdienlicher Kornverteilung und Festigkeit vermischt und unter 120 °C gekühlt wird, ergibt er ein hochfestes Material.

Das thixotropisierende Mittel stellt einen wesentlichen Bestandteil des erfindungsgemässen Präparats dar. In dem geschmolzenen Zustand fliesst das Bindemittel, d. h. der Schwefel sehr leicht aus der Konstruktur des Zuschlagstoffs aus. Aus diesem Grunde ist es unerlässlich thixotropisierende Mittel, in erster Reihe Kieselsäuregele, so z. B. Aerosil, Sylodex usw. aufgerauhter Asbest, Kautschukmehl oder sonstiges feinpulverisiertes Material zuzugeben. In dem erfindungsgemässen Präparat wird vorteilhaft Quartzmehl verwendet.

Die weitere Zielsetzung der Erfindung wird mit Hilfe einer Anlage erreicht, die einen mit Dosiermittel versehenen Behälter für die Lagerung der Trockensubstanz, einen dem Dosiermittel angeschlossenen Vorbereitungsmischer, einen das homogenisierte getrocknete Gemisch aufnehmenden, dem Vorbereitungsmischer angeschlossenen Pufferbehälter aufweist, desweiteren ein das Gemisch von dem Pufferbehälter in den Aufgaberaum überführendes Mittel, ein oder mehrere, mit dem in den Aufgaberaum mündenden Dosiermittel versehene, die pulverförmige Zuschlagstoffe speicherende Behälter und Flüssigkeitsbehälter vorgesehen sind, dem Aufgaberaum ist ein intensives Rührwerk angeschlossen; darüber hinaus weist die Anlage ein mit Verschlusselement versehenes Füllelement, ein über Luftpumpe und Lufterhitzer verfügendes Filtersystem und die Überhitzung verhindernde Thermostate auf.

Eine vorteilhafte Ausführungsform der erfindungsgemässen Anlage weist ein unter dem Füllmittel angeordnetes, die fertige Masse aufnehmendes Element - eine Form-, ein die in die Form eingefüllte verdichtendes Mittel, sowie ein die Formen vorwärmendes Element - zweckmässig einen Tunnelofen auf.

Bei einer weiteren vorteilhaften Ausführung der Erfindung ist zwischen dem sich dem Pufferbehälter anschliessenden Dosierelement und dem Aufgaberaum ein das Gemisch trocknender und durchmischender beiheizbarer Wärmekompensator vorhanden, während der Lufterhitzer der Dosiervorrichtung des den Feststoff speichernden Behälters, das erste Filtersystem über ein Regelventil dem Pufferbehälter, das zweite Filtersystem über das Dosierelement dem Wärmekompensator angeschlossen sind.

Es ist weiterhin als vorteilhaft betrachtet, wenn die erfindungsgemässe Anlage einen in dem gemeinsamen Raum angeordneten Pufferbehälter, eine oder mehrere, die pulverförmigen Zuschlagstoffe speichernde Behälter, Flüssigkeitsbehälter und Aufgaberaum aufweist, desweiteren das erste Filtersystem über einen entsprechenden Ventilator unter Druck gehaltenen ist, und über einen Lufterhitzer einerseits dem Pufferbehälter, anderseits dem Dosiermittel des Vorbereitungsmischers ein Wärmeaustauscher angeschlossen ist. Das zweite Filtersystem schliesst sich dem gemeinsamen Raum an.

Eine weitere vorteilhafte Ausführungsform der erfindungsgemässen Anlage ist mit einer Schnecke, als Dosiermittel ausgestattet.

Bei einer weiteren vorteilhaften Ausführung der erfindungsgemässen Anlage ist auf dem Flüssigkeitsbehälter ein Messventil als Dosiermittel vorgesehen.

Bei einer weiteren vorteilhaften Ausführung der Erfindung wird als Füllmittel ein Füllrohr eingesetzt, während der Vorbereitungsmischer und der Wärmekompensator mit elektrischen Heizelementen ausgestattet sind.

## Kurze Erleichterung der Zeichnungen

Die Erfindung wird anhand einiger vorteilhaften Ausführungsbeispiele, unter Bezugnahme auf die beiliegenden Zeichnungen näher erläutert. Es zeigen:

Figur 1 das Schema der erfindungsgemässen Anlage, die insbesondere bei Errichtungen grosser Kapazität verwendbar ist,

Figur 2 eine weitere Ausführungsform der erfindungsgemässen Anlage, die aus dem Standpunkt der Wärmezufuhr und Luftzirkulation besonders vorteilhaft ist.

Bevorzugte Verwirklichung der Erfindung

Als Zuschlagstoff enthält das erfindungsgemässe Präparat zweckmässig sandhaltigen Kies und/oder sonstige Gesteine mit geeignetem Gefüge. Diese Zuschlagstoffe sind die Schotter der an sich bekannten, sowieso zur Verwendung kommenden Baugesteine, oder Aggregate in dem natürlichen zerkleinerten Zustand, wie z. B. Basalt, Andesit usw. Der Zuschlagstoff darf keinesfalls tonhaltige oder sonstige gegenüber Wasser empfindliche Bestandteile enthalten, da ansonsten die Stabilität des Fertigprodukts gefährdet wird

In dem erfindungsgemässen Präparat dürfen nur solche Gesteine verwendet werden, die bis 150-160 °C thermostabil sind, das bedeutet, dass die Stabilitätscharakteristiken sich nach dem Austreten des darin absorbierten Wassers nicht verschlechtern, keine die Abbindung verhindernden Stoffe abgeben, bei der gegebenen Temperatur keine die Festigkeit beeinträchtigende Änderung vor sich geht.

Falls die Nötigkeit besteht das Gewicht der geformten Produkte zu verringern, können in optimalem Fall solche Zuschlagstoffe verwendet werden, womit der Beton leichter wird. Als solche sollen in erster Reihe die verschiedenen Abfälle erwähnt werden, die in dem erfindungsgemässen Präparat vorteilhaft angewendet werden können, wodurch der ansonsten unwertvolle Abfall neuverwendet werden kann. Solche Abfälle sind z. B. die Granulate der duroplastischen Kunststoffe, Gummimahlgut, Granulate von Kabelmänteln oder sonstige organische und unorganische Abfälle.

Nach Bedarf können die erfindungsgemässen Präparate Verstärkungsmittel enthalten. Eine derartige Zugabe ist insbesondere zur Erhöhung der Biege-Zugfestigkeit, der Schlagfestigkeit und Scherfestigkeit, zwecks Formbeständigkeit und Thixotropie erforderlich. Zu diesem Zwecke werden zweckdienlich verschiedene Fasern verwendet, diese können gehackt und eingemischt werden, die Form eines Gewebes, Laminata aufweisen, in Spezialfällen verwendet man an Ort und Stelle montierte oder präfabrizierte Netze. Zu diesem Zwecke können vorteilhaft Glasfasern, bzw. Asbestfasern, zweckdienliche synthetische oder Metallfasern verwendet werden.

Als weitere Aggregate des erfindungsgemässen Präparats verwendet man hydrophobisierende und haftungerhöhende und biozide Stoffe.

Als hydrophobisierende Mittel werden z. B. Metallseifen, vorteilhaft Kalzium-Magnesium, bzw. Zinkstereat und Ammoniumstereat, Silikonharze und Silikonatlösungen, Alkali-Methyl-Silikonate, Triäthanol-ammoniumstereat, Vinylstereate, Aluminium-triiso-Propylat und ähnliche Verbindungen verwendet. Verschiedene Bitumene stellen ebenfalls zweckdienliche hydrophobisierende Mittel dar.

Die haftungserhöhenden Stoffe sind meistens organophilisierende Mittel, die die Oberfläche des Gesteinmaterials gegenüber dem nicht-wässerigen Medium aktiver machen. Ein solches vorteilhaftes Material ist z. B. das Oktadezilamin oder das Diamin-hexamethylen-Azetat usw.

Die Bedeutung der Zugabe der bioziden Stoffe besteht darin, dass gewisse Bakteria, Schimmel bzw. Algen den Schwefel angreifen können. Zur Verhinderung deren Ver mehrung können z. B. Parachlormetakresol, Methyl-phenol, Natrium-pentachlor-Phenolat, Tributyl-Zinnoxyd-Kupfer-Naphtenat und ähnliche verwendet werden. Kochsalz ist auch ein erfolgreicher biozider Stoff, der das Zellenwasser auszufällen fähig ist.

Mit Hinsicht darauf, dass Kochsalzzugabe die Qualität des Präparats keinesfalls negativ beeinflusst, ist die erfindungsgemässe Komposition besonders vorteilhaft, da in diesem auch salzige Zuschlagstoffe, d. h. maritime bzw. Wüstengesteine und Sandarten verwendet werden können, was bisher bei Produkten der Bauindustrie unmöglich war.

Das Verhältnis der einzelnen Komponenten innerhalb des Präparats kann sich zwischen weiten Grenzen ändern. Untenangeführt geben wir die Zusammensetzung einiger möglichen Gemische an, ohne aber unseren Schutzkreis auf die angegebenen Zusammensetzungen zu beschränken:

4

| (A) Gemisch: | | |
|---|---|---|
| I. | 20 Massenteile | Quartzmehl (Qualität DIN 80) |
| II. | 40 Massenteile | Kies 0/1 mm (Zuschlagstoff nach ungarischer Norm) |
| III. | 60 Massenteile | Kies 1/4 mm |
| IV. | 40 Massenteile | Kies 4/8 mm |
| V. | 40 Massenteile | Kies 8/16 mm |
| VI. | 1 Massenteil | Kalziumstearat |
| VII. | 45 Massenteile | Schwefel industrieller Qualität |
| (B) Gemisch: | | |
| I-V. | Komponenten | wie beim Gemisch (A) |
| VI. | Massenteile | Kalziumstearat |
| VII. | Massenteile | Schwefel |
| VIII. | 0,05 Massenteile | Pentachlor-phenol-Natrium |
| (C) Gemisch: | | |
| I-V. | Komponenten | wie beim Gemisch (A) |
| VI. | 0,5 Massenteile | Graphit |
| VII. | 40 Massenteile | Schwefel industrieller Qualität |
| (D) Gemisch: | | |
| I-V. | Komponenten | wie beim Gemisch (A) |
| VI. | 1 Massenteil | zerhackte Glasfasern, Faserlänge 20 mm |
| VII. | 40 Massenteile | Schwefel industrieller Qualität |

In den obenangegebenen Gemischen kann die maximale Korngrösse des Zuschlagstoffes beliebig geändert werden.

Das erfindungsgemässe Präparat wird nach einer streng geschlossenen Technologie folgenderweise erzeugt. Zuschlagstoffe mit der entsprechenden Fraktionszahl werden in Silos gelagert.

Der Zuschlagstoff mit der entsprechend geplanten Kornzusammensetzung wird zuerst ausgetrocknet. Zur Trocknung kann die aus der Kühlung des bereits ausgeformten Produkts stammende Abwärme verwendet werden, während dessen der Zuschlagstoff sich erhitzt.

In der Abhängigkeit des Charakters des dem Präparat beizumischen beabsichtigten Zuschlagstoffes werden diese vor oder nach der Trocknung zugegeben. Es wird als vorteilhaft betrachtet wenn aus den hydrophobisierenden Mitteln Silikone der Trocknung vorangehend, Bitumen nach der Trocknung zugegeben werden. Thixotropisierendes Mittel kann gleicherweise vor oder nach der Trocknung beigemischt werden.

Während der Trocknung wird die Temperatur des Gemisches allmählich auf 130-140 °C erhöht, die Temperatur wird eine vorbestimmte Zeit lang aufrechterhalten. Darauffolgend wird das Gemisch des Zuschlagstoffs, gegebenenfalls das Gemisch des Zuschlagstoffes und des Verstärkungsmittels mit dem geschmolzenen Schwefel gleicher Temperatur, zweckmässig im Temperaturbereich zwischen 120 und 150 °C vermischt.

Um Forderungen des Umweltschutzes befriedigen zu können, wird der Schwefel in einer geschlossenen Schmelzanlage geschmolzen, damit Schwefeldunst auf das Minimum beschränkt sein könne. Aus diesem Grunde ist die Schmelzanlage mit einem wärmezuführenden System versehen um örtliche Überhitzung vermeiden zu können; eine Überhitzung des Schwefels könnte nämlich zu Oxydation bzw. Eigenzündung führen, wodurch Schwefeldioxyd entsteht, dabei wird der Schwefel polymerisiert und zur Bindung unfähig. Aus diesem Grunde ist es vorgeschlagen die Heizmittel mit einem Thermostat zu versehen und in der Schwefelschmelzanlage ein Rührwerk zur Sicherstellung der gleichmässigen Wärmezufuhr einzusetzen.

Im Sinne der Erfindung wird das Präparat in einer geschlossenen Technologie verarbeitet, Verschalungen und alle Vorrichtungen, die mit Schwefel oder sonstigem, bereits vermischtem aber noch nicht verarbeitetem Präparat in Berührung stehen, sollen zweckmässig bei einer Temperatur von 120-150, zweckmässig 130-140 °C gehalten werden.

Das homogen vermischte flüssige Gemisch wird in die entsprechend gestaltete Verschalung eingegossen, gegebenenfalls können wir Verstärkungsmittel auch zugeben. Gegenüber der Verschalung besteht die Forderung, dass diese wärmebeständig sei, so können wir Metallverschalungen erfolgreich anwenden, aber sonstige, aus dem Standpunkt der Wärmeisolierung vorteilhafte Verschalungen, z. B. aus Keramik oder wärmebeständigem Kunststoff können auch verwendet werden. Das Gemisch mit der plastischen Konsistenz wird zweckmässig mit einem Vibrator, z. B. auf einem Vibrotisch oder mit einem Verschalungsvibrator verdichtet. Offensichtlich ist die Frequenz des verdichtenden Vibrators so zu wählen, dass die Körner des Zuschlagstoffes und der faserigen Stoffe keinesfalls sich entmischen.

In dem nächsten Arbeitsschritt wird das in die Verschalung eingefüllte und verdichtete Präparat in den Kühlraum weitergeleitet, das auf Raumtemperatur gekühlte Gemisch kann sofort entschalt und verwendet werden.

Aus dem erfindungsgemässen Präparat können die verschiedensten Formkörper, so Bekleidungselemente, Profilkörper bzw. Rohre hergestellt werden, selbstverständlich beschränkt sich die Anwendungsmöglichkeit überhaupt nicht auf die hier erwähnten Produkte.

Aus dem erfindungsgemässen Gemisch können in der Abhängigkeit des verwendeten Zuschlagstoffes praktisch porenfreie, so im wesentlichen Wasser nicht aufsaugende Körper mit einer Körperdichte von 2000-2500 kg/m³ hergestellt werden, die eine Druckfestigkeit von 30,0-60,0 MPa und eine Biege-Zugfestigkeit von 3,0-5,0 MPa aufweisen. Das Produkt wird von mittelstarken Laugen und Säuren nicht angegriffen, die Mehrheit der organischen Lösemittel lösen es nicht.

Im wesentlichen besteht die erfindungsgemässe Anlage aus einem, mit Dosiermittel 2 versehenen Behälter 1, in dem Feststoff gespeichert wird, aus dem dem Dosiermittel 2 angeschlossenen Vorbereitungsmischer 3, dem das homogenisierte und getrocknete Gemisch aufnehmenden, sich dem Vorbereitungsmischer anschliessenden Pufferbehälter 26, aus der das Gemisch aus dem Pufferbehälter 26 in einen weiteren thermisch kompensierenden Behälter 6 überführenden Rutsche 5, sowie aus dem Aufgaberaum 7, der sich der Rutsche 5 gegenüberliegendem Ende des thermisch kompensierenden Behälters anschliesst; weiterhin weist die Anlage ienen mit dem Aufgaberaum 7 kommunizierenden, mit den Dosiermitteln 24 und 9 versehenen Flüssigkeitsbehälter, einen die pulverförmigen Zuschlagstoffe speichernden Behälter 8 und einen intensiven Mischer 10 auf, dem Mischer 10 schliesst sich das mit dem Verschlusselement 11 - mit einer Klappe - versehene Füllelement 12 an.

Die erfindungsgemässe Filteranlage ist mit zwei Filtersystemen versehen. Das erste Filtersystem besteht aus dem mit der Luftpumpe 18 versehenen Filterkörper 17, der Filterkörper 17 ist über eine, mit dem Regelventil 16 versehene Leitung dem Pufferbehälter angeschlossen, während das mit der Luftpumpe 20 versehene Filtersystem 19 sich der Rutsche 5 anschliesst, die den Pufferbehälter 26 mit dem thermisch kompensierenden Behälter 6 verbindet.

Desweiteren ist die Anlage mit einem Lufterhitzer 15 ausgestattet, der dem Vorbereitungsmischer 3 angeschlossen ist; dem Lufterhitzer wird die Aufgabe zugeteilt den aus dem Behälter 1 in den Vorbereitungsmischer 3 gelangenden Feststoff zu trocknen bzw. während des Mischprozesses diesen mit Warmluft zu versorgen und dadurch die Qualität des Gemisches zu verbessern.

Um die zu der Technologie erforderliche Temperatur gewährleisten zu können, werden die Mäntel des Vorbereitungsmischers 3 und des kompensierenden Behälters 6 geheizt, Heizung wird mit Hilfe der Heizelemente 25 realisiert. Der Vorbereitungsmischer 3 und der ausgleichende Behälter 6 werden mit den Rührantrieben 36 in Drehbewegung gesetzt.

Mit Hinsicht darauf, dass die Temperatur der in den Aufgaberaum 7 gelangenden Stoffe äusserst wichtig ist, ist das System mit den Wärmefühlern 21, 22 versehen. Der Wärmefühler 21 kontrolliert die Temperatur des von dem Vorbereitungsmischer 3 ankommenden Stoffes, während der Wärmefühler 22 die Temperatur in dem ausgleichenden Behälter 6 kontrolliert. Die Drehbewegung des intensiven Mischers 10 wird mit einem separaten Antrieb 33 gesichert.

Der guten Ordnung halber soll es bemerkt werden, dass die während der Herstellung produzierte Masse über das Füllelement-Füllrohr 12 in die Form 13 geleitet wird. Um die Form 13 mit der Masse gleichmässig auffüllen und die Masse gut verdichten zu können, wird die Form 13 auf einen Vibrotisch gelegt, unter Zuhilfenahme dessen die Masse verdichtet wird.

Es ist äusserst wichtig, dass die Form keinesfalls kalt sei, wenn sie mit der Masse in Berührung kommt, da auf diese Weise die Kühlung auf unerwünschte Art und Weise vor sich geht und in dem Fertigprodukt schädliche Spannungen entstehen können, die die Festigkeitseigenschaften beeinträchtigen. Damit diese Erscheinung vermieden werden könne, pflegt man die Formen 13 - vorteilhaft in einem Tunnelofen -vorzuwärmen.

Die Wirkungsweise der erfindungsgemässen Anlage ist, wie folgt:

Der vorbereitete - getrocknete - Feststoff gelangt in den Behälter 1. Von hier wird der Stoff mit dem Dosiermittel 2 - vorteilhaft eine mit dem Antrieb 34 angetriebene Schnecke - in den Vorbereitungsmischer 3 weitergeleitet, wo der Stoff homogenisiert, bzw. weiter getrocknet und erwärmt wird. Erhitzung wird mit dem Heizelement 25 vorgenommen.

Der in dem Vorbereitungsmischer in entsprechendem Masse erhitzte Stoff gelangt in den Pufferbehälter 26, der mit der Schleuse 4 verschlossen ist. Der sich in dem den Feststoff aufnehmenden Behälter befindende Stoff verfügt noch über einen gewissen Feuchtigkeitsinhalt, die Feuchtigkeit wird mit dem ersten Filtersystem entfernt undzwar so, indem die Freiluft über den Saugstutzen 14 in den Lufterhitzer 15 gelangt, wovon diese in den Vorbereitungsmischer 3 geleitet wird. Die eingeblasene Luft nimmt in dem Vorbereitungsmischer 3 den Feuchtigkeitsgehalt des Feststoffes auf und tritt über das Regelventil 16, den Filterkörper 17 und die Luftpumpe 18 ins Freie hinaus.

Mit Hinsicht darauf, dass die Menge des in den Aufgaberaum 7 bzw. in den intensiven Mischer 10 gelangenden Stoffes im Laufe der Produktion im voraus bestimmt wird, so wird von dem Pufferbehälter 26 nur eine bestimmte Stoffmenge über die Schleuse 4 in den ausgleichenden Behälter 6 und danach in den Aufgaberaum 7 eingelassen. Die Gestaltung des egalisierenden Behälters 6 ist im wesentlichen mit jener des Vorbereitungsmischers 3 übereinstimmend.

Zu dem aus dem kompensierenden Behälter 6 in den Aufgaberaum 7 gelangenden Stoff von bestimmter Menge und Temperatur werden die weiteren flüssigen bzw. pulverförmigen Stoffe eingewogen. Der pulverförmige Zuschlagstoff wird aus dem Behälter 8 über die mit dem Antrieb 34 angetriebene Schnecke 9 in den Aufgaberaum 7 eingegeben, während der flüssige Zuschlagstoff über das Messventil 24 aus dem Flüssigkeitsbehälter 23 entnommen wird.

Es soll hier bemerkt werden, indem wenn die Technologie die Zugabe mehrerer Zuschlagstoffarten beansprucht, so kann die Zahl des die pulverförmigen Zuschlagstoffe enthaltenden Behälters 8, sowie die Zahl des Flüssigkeitsbehälters 23 vervielfacht werden, die einzige Forderung besteht darin, dass jeder einzelne Behälter in den Aufgaberaum 7 münde. Im Laufe der Technologie wird der als Bindemittel dienende Schwefel bei Raumtemperatur aus dem Behälter 8 in den Aufgaberaum 7 aufgegeben, während der geschmolzene Schwefel aus dem Behälter 23 in den Aufgaberaum 7 eingeleitet wird.

Die eigentliche Masse wird in dem intensiven Mischer 10 hergestellt. Der Mischer 10 beruht vorteilhaft auf dem Prinzip der anschlagenden Ströme und auf dem Wirbelrührsystem, der Mischer ist mit gegenläufigen Rotorschaufeln versehen.

Die in dem intensiven Mischer 10 erzeugte homogene Masse gelangt über die Klappe 11 in das Füllrohr 12, darauffolgend in die Form 13, in der die Verarbeitung vor sich geht. Die Formen werden mit Hilfe eines hier nicht dargestellten Tunnelofens auf die Temperatur der Masse vorgewärmt, nach erfolgter Verdichtung auf dem Vibrotisch wird das fertiggestellte Produkt auf die Raumtemperatur abgekühlt.

Der Luftraum des Materialstroms strömt auf dem der Rutsche 5 folgenden Teil in einem vollkommen geschlossenen System weiter. Auf diese Weise vermischen sich die hindurch die undichten Spalten einströmende Spaltluft und der Dampf des geschmolzenen Schwefels.

Unter Betrachtnahme der ökologischen Standpunkte wird das System mit der Luftpumpe 20 unter geringem Vakuum gehalten. Das austretende Medium wird über das Filtersystem 19 geleitet und in die Atmosphäre ausgelassen.

Es ist ein wichtiges Grundprinzip, dass während der Erhitzung des Zuschlagstoffes - wenn die Feuchtigkeit noch anwesend ist - das Hineingelangen der Schwefeldämpfe verhindert sei. Zu diesem Zwecke dient die Schleuse 4, bei einem eventuellen Durchschlag werden die Schwefelspuren auf dem Filterkörper 17 absorbiert. Der guten Ordnung halber soll es bemerkt werden, dass es ist als zweckmässig betrachtet, wenn die Depression der Luftpumpe 18 die Depression der Luftpumpe unterschreitet. Die Temperatur des Massenstroms wird mit den Wärmefühlern 21, 22 kontrolliert.

Es soll noch bemerkt werden, dass der Prozess vollkommen automatisierbar ist, es besteht die Möglichkeit eines Betriebs in einem vollkommen geschlossenen System.

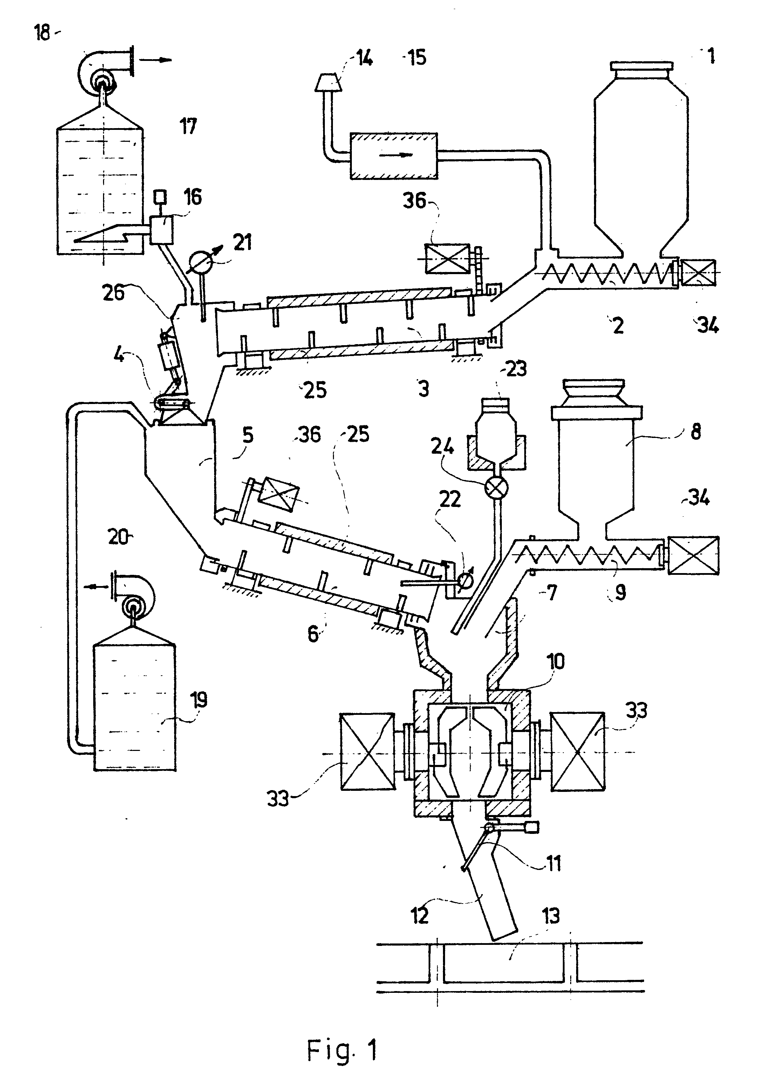

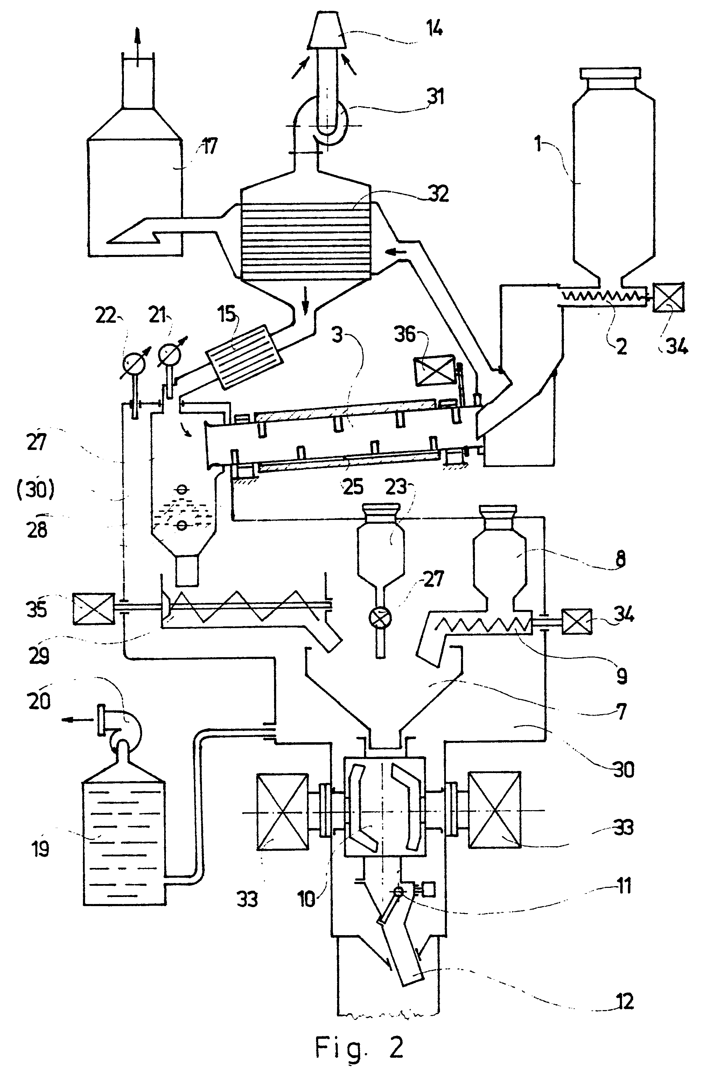

In Figur 2 ist die weitere vorteilhafte Realisierungsmöglichkeit der erfindungsgemässen Anlage schematisch dargestellt. Die in der Figur veranschaulichte Lösung ist mit der Lösung nach Figur 1 grösstenteils übereinstimmend, aber zahlreiche Unterschiede können festgestellt werden, so z. B. erübrigt sich der ausgleichende Behälter bei dieser Ausführungsform, hingegen ist das erste Filtersystem mit einem weiteren Wärmeaustauscher 32 ergänzt, unter Zuhilfenahme dessen ein Gegenstrom in dem Vorbereitungsmischer 3 zustandekommt. Ein weiterer Unterschied besteht darin, indem der Pufferbehälter 27, der (die) weitere(n) Flüssigkeitsbehälter 23, sowie der (die) Behälter (8) in einem gemeinsamen Raum 30 angeordnet sind, wobei das zweite Filtersystem diesem gemeinsamen Raum 30 angeschlossen ist.

Die Ausführungsform nach Figur 2, die eine kontinuierliche Betriebsweise in einem geschlossenen System darstellt, ermöglicht z. B. die Produktion von Rohren.

Die über den Saugstutzen 14 eintretende Luft gelangt in den Wärmeaustauscher 32, der mit der aus dem Vorbereitungsmischer 3 austretenden warmen Luft vorerwärmt wird, so entfällt auf den Lufterhitzer 13

7

eine geringere Anzahl von Wärmestufen. Bei der hier geschilderten Ausführungsform funktioniert der Ventilator 31 als Druckquelle. Der Stoff gelangt aus dem Behälter 1 über das Dosiermittel 12 - das eine mit dem Antrieb 34 angetriebene Schnecke ist - in den Vorbereitungsmischer 3 und von dort in den Pufferbehälter 27, von hier gelangt die Masse mit Hilfe des Dosiermittels 29 - das ebenfalls eine mit dem Antrieb 35 angetriebene Schnecke ist - in den Aufgaberaum 7. Die Menge des aus dem Pufferbehälter 27 in den Aufgaberaum 7 weitergeleiteten Stoffes wird mit dem Standanzeiger 28 kontrolliert; die Standanzeiger 28 bestimmen eine Schichtdicke, die der Druckluft eine kraftvolle Drosselung gebend die Rolle der Schleuse 4 der Lösung nach Figur 1 übernimmt. Die sich in dem sogenannten zweiten Luftzirkulationsraum befindenden Elemente mit dem Pufferbehälter zusammen sind in dem gemeinsamen Raum 30 angeordnet, der sich - nach den Bedingungen, wie es im Zusammenhang mit Figur 1 beschrieben worden ist - in einem angesaugten Zustand befindet.

Darauffolgend wird in dem intensiven Mischer 10 die Masse hergestellt und über das Füllrohr 12 in die Form oder jedwelches Element nach der Technologie eingeleitet.

## Ansprüche

1. Präparat zur Herstellung von präfabrizierten Elementen oder ähnlichen Produkten, dadurch **gekennzeichnet,** dass das Präparat Schwefel, Zuschlagstoff, thixotropisierendes Mittel, sowie gegebenenfalls Aggregat, biozides Material und Faserverstärkung enthält.

2. Präparat nach Anspruch 1, dadurch **gekennzeichnet,** dass es Schwefel, Zuschlagstoff, thixotropisierendes Mittel und Faserverstärkung enthält.

3. Präparat nach Anspruch 1, dadurch **gekennzeichnet,** dass als thixotropierendes Mittel Kieselsäureregel oder Quartzmehl enthalten ist.

4. Anlage zur Herstellung von Bauelementen auf Schwefelbasis, dadurch **gekennzeichnet,** dass ein mit Dosiermittel (2) versehener Behälter (1) für die Speicherung des Feststoffes, ein dem Dosiermittel (2) angeschlossener Vorbereitungsmischer (3), sowie ein das homogenisierte getrocknete Gemisch aufnehmender, dem Vorbereitungsmischer (3) angeschlossener Pufferbehälter (27, 26) enthalten sind, desweiteren weist die Anlage ein das Gemisch aus dem Pufferbehälter (26, 27) in den Aufgaberaum (7) überleitendes Mittel (5, 29), einen oder mehrere, mit dem in den Aufgaberaum (7) einmündenden Dosiermittel (9, 24) versehene, pulverförmigen (pulverförmige) Stoff(e) speichernde Behälter (8), einen oder mehrere Flüssigkeitsbehälter (23) auf, dem Aufgaberaum (7) schliesst sich der intensive Mischer (10) an, desweiteren sind ein mit Verschlusselement (11) versehenes Füllelement (12), sowie über Luftpumpe (18, 20) und Lufterhitzer (15) verfügende Filtersysteme (17, 19) und die Überhitzung verhindernden Wärmefühler (21, 22) enthalten.

5. Anlage nach Anspruch 4, dadurch **gekennzeichnet,** dass ein unter dem Füllmittel (12) angeordnetes, die fertige Masse aufnehmendes Element - eine Form (13) - , ein Mittel zur Verdichtung der in die Form eingefüllten Masse, sowie ein Element zur Vorerwärmung der Masse enthalten sind.

6. Anlage nach Anspruch 5, dadurch **gekennzeichnet,** dass die Formen in einem Tunnelofen vorerwärmt werden, während als Verdichtungsmittel ein Vibrotisch eingesetzt wird.

7. Anlage nach jedwelchem der Ansprüche 1 bis 6, dadurch **gekennzeichnet,** dass zwischen dem dem Pufferbehälter (26) angeschlossenen Dosierelement (5) und dem Aufgaberaum (7) ein das Gemisch trocknender und durchmischender heizbarer, thermisch ausgleichender Behälter (6) angeordnet ist, der Lufterhitzer (15) dem Dosiermittel (2) des den Feststoff aufnehmenden Behälters (1) angeschlossen ist, während das erste Filtersystem (17) über ein Regelventil (16) dem Pufferbehälter (26), das zweite Filtersystem (18) über das Dosierelement (5) dem thermisch ausgleichenden Behälter (6) angeschlossen ist.

8. Anlage nach jedwelchem der Ansprüche 4 bis 6, dadurch **gekennzeichnet,** dass in einem gemeinsamen Raum (30) ein Pufferbehälter (27), ein oder mehrere, die pulverförmigen Zuschlagstoffe speichernde Behälter (8), ein oder mehrere Flüssigkeitsbehälter (23) und Aufgaberaum (7) angeordnet sind, das erste Filtersystem ist mit Hilfe eines Ventilators (31) unter Druck gehalten, und ist mit einem Wärmeaustauscher (32) versehen, der einerseits dem Pufferbehälter (27), anderseits dem Dosiermittel (2) des Vorbereitungsmischers (3) angeschlossen ist, wobei das zweite Filtersystem (19) sich dem gemeinsamen Raum (30) an schliesst.

9. Anlage nach jedwelchem der Ansprüche 4 bis 8, dadurch **gekennzeichnet,** dass die Dosiermittel (2, 9, 29) Schnecken sind.

10. Anlage nach jedwelchem der Ansprüche 4 bis 9, dadurch **gekennzeichnet,** dass der Flüssigkeitsbehälter (23) mit einem Messventil (24) versehen ist.

11. Anlage nach jedwelchem der Ansprüche 4 bis 10, dadurch **gekennzeichnet,** dass ein Füllrohr als Füllmittel (12) dient.

12. Anlage nach jedwelchem der Ansprüche 4 bis 11, dadurch **gekennzeichnet,** dass elektrische Heizelemente (25) enthalten sind.

Fig. 1

Fig. 2